# EUROPÄISCHE PATENTSCHRIFT

(11) **EP 0 764 798 B1**
(45) Veröffentlichungstag und Bekanntmachung des Hinweises auf die Patenterteilung: **09.06.1999**
(21) Anmeldenummer: 96114523.2
(22) Anmeldetag: 11.09.1996
(51) Int. Cl.: F16H 57/08, F16H 57/04

(54) **Planetenrad-Trägeranordnung mit Axialabstützung**
Planet-carrier device with axial support
Dispositif porte-satellites avec support axial

(30) Priorität: 20.09.1995 DE 19534791
(43) Veröffentlichungstag der Anmeldung: 26.03.1997
(73) Patentinhaber: Ford Global Technologies, Inc., Dearborn, Michigan 48126-2490 (US)
(72) Erfinder: Premiski, Vladimir, 53909 Zuel pich-Buervenich (DE); Schneider, Björn, 50737 Köln (DE); Brassai, Zoltan, 51467 Bergisch-Gladbach (DE)
(74) Vertreter: Messulam, Alec Moses

(56) Entgegenhaltungen:
- EP-A- 0 230 522
- DE-A- 2 652 652
- US-A- 4 615 231
- PATENT ABSTRACTS OF JAPAN vol. 095, no. 011, 26.Dezember 1995 & JP 07 208587 A (HONDA MOTOR), 11.August 1995,
- PATENT ABSTRACTS OF JAPAN vol. 010, no. 176 (M-491), 20.Juni 1986 & JP 61 024857 A (AISIN WARNER), 3.Februar 1986,
- PATENT ABSTRACTS OF JAPAN vol. 010, no. 193 (M-496), 8.Juli 1986 & JP 61 038249 A (AISIN WARNER), 24.Februar 1986,

## Beschreibung

Die Erfindung bezieht sich auf eine Planetenradträgeranordnung mit Axialabstützung der im Oberbegriff des Patentanspruches 1 erläuterten Art, wie sie aus der JP-A-7 208 587 bekannt ist.

Eine weitere Planetenradträgeranordnung mit Axialabstützung ist durch eine Anwendung innerhalb eines automatischen Getriebes bekannt und umfaßt eine Planetenradträgeranordnung mit einem axial benachbartem Axialnadellager, dessen eine Anlaufscheibe unmittelbar gegen den Planetenradträger anliegt.

Aus der DE-PS 26 52 652 sind Planetenradträgeranordnungen bekannt, an denen eine die Schmierölzufuhr zu den Planetenradbolzen sichernde, an ihrem Innenumfang kegelstumpfförmig ausgebildete Ölstauscheibe am Planetenradträger festgelegt ist. Die Ölstauscheibe bildet hierbei gleichzeitig eine axiale Sicherung für die Planetenradbolzen.

Aus der EP-PS 0 274 874 ist eine weitere Planetenradträgeranordnung bekannt, bei dem eine die Schmierölzufuhr zu den hohlen Planetenräderbolzen sichernde, an ihrem Innenumfang kegelstumpfförmig ausgebildete Ölstauscheibe am Planetenradträger festgelegt ist. Die bekannte Ölstauscheibe bildet hierbei ebenfalls eine axiale Sicherung für die Planetenradbolzen nach Art eines Bajonettverschlusses.

Die Aufgabe der vorliegenden Erfindung ist es, eine Planetenradträgeranordnung mit Axialabstützung gemäß dem Stand der Technik mit einer unmittelbar am Planetenradträger festgelegten Ölstauscheibe derart auszugestalten, daß sowohl die Axialabstützung als auch die Schmierölzufuhr mit geringstmöglichem Bauaufwand sichergestellt wird.

Gemäß der Erfindung wird diese Aufgabe gelöst, indem eine Planetenradträgeranordnung mit Axialabstützung, der im Oberbegriff des Patentanspruches 1 erläuterten Art, die im Kennzeichenteil des Patentanspruches 1 aufgezeigten Merkmale aufweist.

Eine weitere Einzelheit ist im Anspruch 2 erläutert.

Dadurch, daß bei einer Planetenradträgeranordnung mit Axialabstützung und am Planetenradträger festgelegten Ölstauscheibe, die Ölstauscheibe von der Anlaufscheibe des benachbarten Nadellagers gebildet wird, die einen polygonalen Außenumfang aufweist und in einer eine entsprechende Polygonform aufweisenden Ausnehmung am Planetenradträger aufgenommen wird und hier durch Verstemmen der Eckbereiche des Polygons der Anlaufscheibe festgelegt wird, wird eine Festlegung der Ölstauscheibe am Planetenradträger erzielt, daß deren Mittenbereich unmittelbar die Funktions der Anlaufscheibe für das benachbarte Nadellager übernehmen kann. Dadurch, daß die Anlaufscheibe, wie an sich bei Ölstauscheiben bekannt, an ihrem Innenumfang kegelstumpfförmig ausgebildet ist, wird eine sichere Schmierölzufuhr zu den hohlen Planetenräderbolzen bereitgestellt.

Die Erfindung wird anhand eines in der beigefügten Zeichnung gezeigten Ausführungsbeispieles näher erläutert. Es zeigt:
- Fig. 1: einen Schnitt entlang der Linie I-I in Fig. 2 durch eine Planetenradträgeranordnung gemäß der Erfindung und
- Fig. 2: eine Ansicht der Planetenradträgeranordnung in Fig. 1 in Richtung des Pfeiles II.

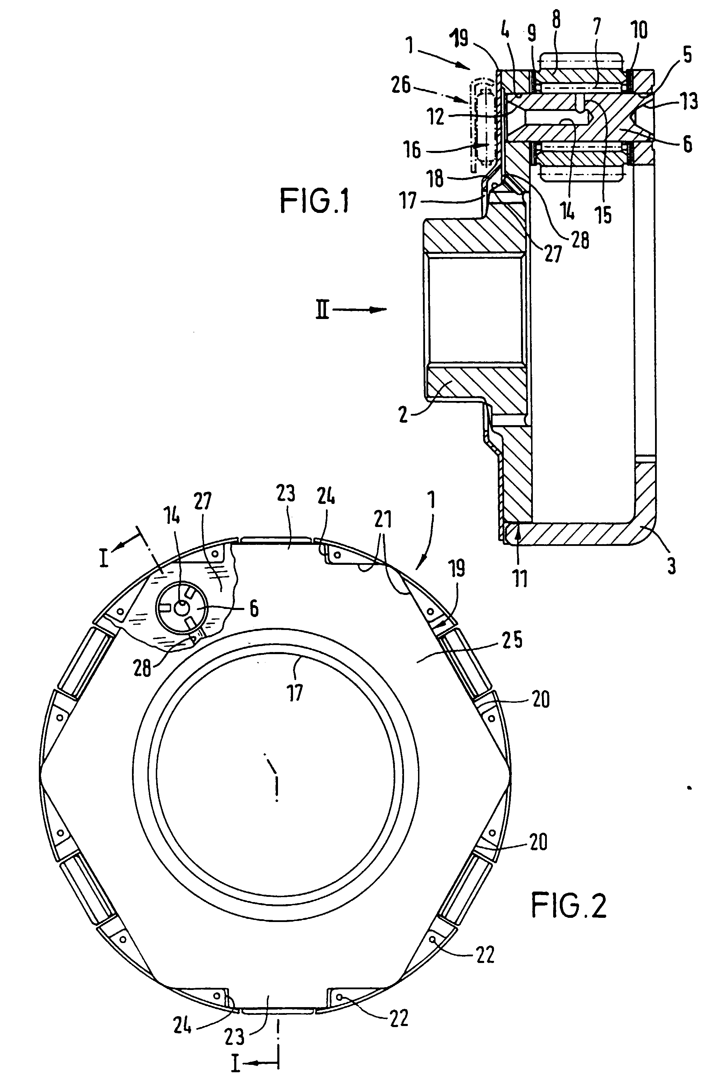

Die in den Figuren 1 und 2 gezeigte Planetenradträgeranordnung 1 besteht im wesentlichen aus einem Planetenradträger-Nabenbauteil 2 und einem gegenüberliegend angeordneten Planetenradträger-Korbbauteil 3, die in einer Vielzahl von entsprechenden Bohrungen 4 bzw. 5 eine Vielzahl von Planetenradbolzen 6 aufnehmen, auf denen über Nadellager 7 Planetenräder 8 drehbar gelagert sind.

Zwischen dem Nabenbauteil 2 und dem Korbbauteil 3 und den Planetenrädern 8 sind in bekannter Weise Anlauf scheiben-Anordnungen 9 und 10 vorgesehen.

Die beiden Planetenradträgerbauteile, das Nabenbauteil 2 und das Korbbauteil 3 können z.B. als ein Fliespreßbauteil oder Sinterbauteil bzw. als ein Blechpreßbauteil ausgebildet sein und werden zum Bilden des Planetenradträgers miteinander bei 11 in geeigneter Weise verbunden.

Die Planetenradbolzen 6 weisen an ihren Enden konischen Ansenkungen 12 und 13 auf, über die sie durch radiales Aufweiten in den Bohrungen 4 und 5 der Planetenradbauteile 2 und 3 festgelegt werden. Von der einen konischen Ansenkung 12 erstreckt sich eine axiale Bohrung 14 zu einer radialen Bohrung 15, über die Schmiermittel zum Nadellager 7 des Planetenrades 8 geführt wird. An der Planetenradträgeranordnung 1 ist an der Seite, wo die konischen Ansenkungen 12 in die axiale Bohrung 14 zur Schmierölzufuhr übergeht, eine Ölstauscheibe 16 angeordnet, die an ihrem Innenumfang 17 kegelstumpfförmig bei 18 ausgestellt ist.

Die Ölstauscheibe 16 ist an ihrem Außenumfang 19 in einer Polygonform 20 ausgebildet, die in einer eine entsprechende Polygonform aufweisenden Ausnehmung 21 am Planetenradträgernabenbauteil 2 aufgenommen wird.

Die Ausnehmung 21 am Nabenbauteil 2 besteht hierbei im wesentlichen aus einer Vielzahl von dreieckigen Vorsprüngen, die durch Verstemmen bei 22 so radial nach innen verformt werden, daß sie eine sichere Festlegung der Ölstauscheibe 16 am Nabenbauteil 2 bewirken.

Die z.B. eine Seckseckform aufweisende Ölstauscheibe 16 kann hierbei zusätzlich an zwei diametral gegenüberliegenden Seiten mit Laschen 23 versehen sein, die in entsprechenden Ausnehmungen 24 am Planetenradträger-Nabenbauteil 2 aufgenommen werden.

Der Mittelbereich 25 der Ölstauscheibe 16, der im wesentlichen die Planetenradbolzen 6 überdeckt, bildet gleichzeitig die Anlaufscheibe für das benachbarte Nadellager 26, das in Strich-Punkt-Linien angedeutet ist.

Damit die gewünschte Schmieröl zufuhr zu den hohlen Planetenradbolzen 6 auch jederzeit sicher gewährleistet ist, sind an der Außenseite 27 des Nabenbauteiles 2 radiale Kanäle 28 ausgebildet, die zu den Bohrungen 4 für die Planetenradbolzen 6 überleiten.

Bei der Vorbenutzung einer Axial-Nadellageranlaufscheibe in dem Bereich, der unmittelbar gegen die durch die Bohrungen der Planetenradbolzen 6 unterbrochenen Außenseite des Nabenbauteiles liegt, wurde die Erfahrung gewonnen, daß diese nicht vollständig plane Abstützung der Anlaufscheibe des Axial-Nadellagers keinerlei schädliche Auswirkungen auf die Lebensdauer des Nadellagers hatte.

## Patentansprüche

1. Planetenradträgeranordnung mit Axialabstützung über ein Nadellager (26), das einem Planetenradträger-Nabenbauteil (2), an dem hohle Planetenradbolzen (6) festgelegt sind, benachbart ist und
- mit auf den hohlen Planetenradbolzen (6) sitzenden und zu schmierenden Planetenrädern (8), sowie
- mit einer die Planetenradbolzen (6) übergreifenden und eine Schmierölzufuhr zu den hohlen Planetenräderbolzen (6) sichernden Ölstauscheibe (16), die an dem Planetenradträger-Nabenbauteil (2) festgelegt ist und unmittelbar von einer Anlaufscheibe (19) des Nadellagers (26) gebildet wird,
**dadurch gekennzeichnet,** daß die Ölstauscheibe (16)
- an ihrem Innenumfang (17) kegelstumpfförmig ausgebildet ist,
- einen polygonalen Außenumfang (20) aufweist,
- in einer eine entsprechende Polygonform aufweisenden Ausnehmung (21) am Planetenradträger-Nabenbauteil (2) aufgenommen wird, und
- in Eckbereichen der polygonförmigen Ausnehmung (21) durch Verstemmen am Planetenradträger-Nabenbauteil (2) festgelegt ist.

2. Planetenradträgeranordnung nach Anspruch 1,
**dadurch gekennzeichnet,** daß
- die Ölstauscheibe (16) eine Sechseckform aufweist, an der an zwei diametral gegenüberliegenden Seiten Laschen (23) ausgebildet sind, die in entsprechenden Ausnehmungen (24) im Planetenradträger-Nabenbauteil (2) aufgenommen werden.

3. Planetenradträgeranordnung nach den Ansprüchen 1 und 2,
**dadurch gekennzeichnet,** daß
- die Außenseite (27) des Planetenradträger-Nabenbauteiles (2) mit radialen Kanälen (28) versehen ist, die in die Bohrungen (4) für die Planetenradbolzen (6) öffnen.

## Claims

1. A planet carrier device with axial support by a needle bearing (26) which is adjacent to a planet carrier hub member (2) on which hollow planet gear pins (6) are secured in position, said device
- having planet gears (8) carried on the hollow planet gear pins (6) and requiring to be lubricated, and also
- having an oil collecting ring (16) which overlaps the planet gear pins (6) and ensures the supply of lubricating oil to the hollow planet gear pins and which is secured in position on the planet carrier hub member (2) and is formed directly by a thrust washer (19) of the needle bearing (26),
characterised in that the oil collecting ring (16)
- is shaped at its inner circumference (17) as a truncated cone,
- has a polygonal outer circumference (20),
- is accommodated in a recess (21) having a corresponding polygonal form in the planet carrier hub member (2)
- and in corner regions of the polygonal recess (21) is secured in position on the planet carrier hub member (2) by caulking (at 22).

2. A planet carrier device according to claim 1,
characterised in that
- the oil collecting ring (16) is hexagonal in shape and has tabs (23) formed on two diametrically opposite sides which are accommodated in corresponding recesses (24) in the planet carrier hub member (2).

3. A planet carrier device according to claim 1 or claim 2,
characterised in that
- the outer side (27) of the planet carrier hub member (2) is provided with radial passages (28) which open into the bores (4) for the planet gear pins (6).

## Revendications

1. Dispositif porte-satellites pourvu d'un appui axial par l'intermédiaire d'un roulement à aiguilles (26) qui est voisin d'une pièce formant un moyeu (2) du porte-satellites, à laquelle sont fixés des axes creux (6) de pignons satellites, et qui comprend
- des pignons satellites (8) montés sur les axes creux (6) et devant être graissés, ainsi que
- un disque de retenue d'huile (16) recouvrant d'un côté les axes (6) des pignons satellites et assurant l'amenée d'huile de graissage à ces axes creux (6), disque de retenue d'huile qui est fixé au moyeu (2) du porte-satellites et formé directement par une plaquette de butée (19) du roulement à aiguilles (26),
**caractérisé en ce que** le disque de retenue d'huile (16)
- est réalisé sous la forme d'un cône tronqué dans sa partie radialement intérieure (17),
- possède une périphérie extérieure polygonale (20),
- est reçu dans un creux (21), ayant une forme polygonale correspondante, du moyeu (2) du porte-satellites et
- est fixé au moyeu (2) du porte-satellites par matage dans des zones angulaires du creux polygonal (21).

2. Dispositif porte-satellites selon la revendication 1, caractérisé en ce que le disque de retenue d'huile (16) possède une forme hexagonale sur laquelle sont réalisées, sur deux côtés diamétralement opposés, des pattes (23) reçues dans des évidements (24) correspondants du moyeu (2) du porte-satellites.

3. Dispositif porte-satellites selon les revendications 1 et 2, caractérisé en ce que le côté extérieur (27) du moyeu (2) du porte-satellites est pourvu de canaux radiaux (28) qui débouchent dans les trous (4) pour les axes (6) des pignons satellites.
